# EUROPÄISCHE PATENTSCHRIFT

(11) **EP 3 392 203 B1**
(45) Veröffentlichungstag und Bekanntmachung des Hinweises auf die Patenterteilung: **26.01.2022**
(21) Anmeldenummer: 17208781.9
(22) Anmeldetag: 20.12.2017
(51) Int. Cl.: C02F 1/42, B01J 41/07

(54) **VERFAHREN ZUR ERZEUGUNG EINER LEITWERTERHÖHUNG IN VOLLENTSALZTEM WASSER**
METHOD FOR GENERATING AN INCREASE IN THE CONDUCTANCE OF DEMINERALISED WATER
PROCÉDÉ DE GÉNÉRATION D'UNE AUGMENTATION DE VALEUR DE CONDUCTIVITÉ DANS L'EAU TOTALEMENT DÉMINÉRALISÉE

(30) Priorität: 19.04.2017 DE 102017108295; 17.05.2017 DE 102017110658
(43) Veröffentlichungstag der Anmeldung: 24.10.2018
(73) Patentinhaber: Aquis Wasser-Luft-Systeme GmbH, Lindau, Zweigniederlassung Rebstein, 9445 Rebstein (CH)
(72) Erfinder: HEITELE, Bernd, 9437 Marbach (CH)
(74) Vertreter: Otten, Roth, Dobler & Partner mbB Patentanwälte

(56) Entgegenhaltungen:
- DE-A1- 3 804 471
- US-A- 4 145 281
- US-A1- 2012 234 797
- US-B1- 6 432 306
- Anonymous: "Vollentsalztes und Entsalztes Wasser in der Kesselspeisewasseraufbereitung", , 17. November 2004 (2004-11-17), XP055467828, Gefunden im Internet: URL:http://www.ewt-wasser.de/de/wissen/vol lentsalztes-wasser.html [gefunden am 2018-04-17]

## Beschreibung

Die Erfindung betrifft ein Verfahren zur Anhebung der Leitfähigkeit von vollentsalztem Wasser mit einer Leitfähigkeit von kleiner 5 µS/cm nach Anspruch 1.

### Stand der Technik:

Wasser kann für verschiedenste Anwendungen benutzt werden. Je nach Anforderung kann hierfür zuvor eine mehr oder weniger anspruchsvolle Aufbereitung erforderlich werden. Insbesondere gibt es spezielle Anwendungen, bei denen praktisch keine Rückstände durch Verdampfen, Verdunsten entstehen dürfen aber gleichzeitig noch eine Restleitfähigkeit grösser 5µS/cm vorhanden sein muss. So wird z. B. vollentsalztes Wasser angewendet, wenn beim Verdunsten bzw. Verdampfen von Wasser keine Rückstände durch gelöste Salze im Wasser entstehen dürfen.

Dies ist beispielsweise dann gefordert, wenn Füllstände in Boilern durch eine Leitwertsonde überwacht werden müssen oder physikalische Eigenschaften des Wassers bei extrem niedriger Leitfähigkeit Probleme bei der Anwendung verursachen. Ein Beispiel hierzu ist die steigende Tropfengrösse in Ultraschallverneblern mit abnehmender Restleitfähigkeit. So ist ein Betrieb unter etwa 5µS/cm nicht mehr möglich, da dann so grosse Tropfen entstehen, dass der Vernebler Wassertropfen verspritzt.

Um jedoch die Funktion "praktisch keine Rückstände durch gelöste Mineralien" ebenfalls zu gewährleisten, darf die Restleitfähigkeit im Wasser 20 µS/cm nicht übersteigen. Dies kann heute durch die Kombination von Vollentsalzerkartuschen und der Dosierung von CO₂ geschehen.

Bei Verwendung von Vollentsalzerkartuschen hat das damit aufbereitete Wasser unabhängig von der Rohwasserleitfähigkeit einen Leitwert kleiner 1 µS/cm. Durch die Zugabe von CO₂ wird das vollentsalzte Wasser "angesäuert" so dass eine Leitfähigkeit von etwa 15 µS/cm entsteht.

Besonders bei stark schwankenden Entnahmemengen nach der Vollentsalzung erfordert die Dosierung eines der oben erwähnten Zusatzstoffe eine hohe Dosiergenauigkeit und auch Messgenauigkeit, um die gewünschte Leitwertspanne durch einen Regelkreis zu erreichen. Entsprechend zuverlässige Dosiermittel sind erforderlich. Diese Methode ist daher teuer.

Es ist nun Aufgabe dieser Erfindung, ein Verfahren anzugeben, mittels dem in einem durch Ionenaustausch erzeugten, vollentsalzten Wasser eine kostengünstige und vorzugsweise eine im Wesentlichen entnahmeunabhängig stabile Leitwerterhöhung erreicht werden kann. Insbesondere im Bereich von etwa 15 µS/cm bis etwa 25 µS/cm.

Die Lösung der Aufgabe erfolgt durch die Merkmale des unabhängigen Anspruchs 1. In den abhängigen Ansprüchen werden vorteilhafte und zweckmäßige Weiterbildungen angegeben.

Die US 2012/234797 offenbart eine Vorrichtung zur Verhinderung von Korrosion mittels Einstellung der Qualität einer Flüssigkeit für elektrochemische Behandlung von metallischen, vorzugsweise Eisen basierten Werkstücken. Im Filterbett findet ein Neutralaustausch von z.B. Ca, Eisen etc. gegen Na und Carbonat, Chlorid etc. gegen NO2 statt, jedoch keine Anhebung der Ionenfracht bzw. der Leitfähigkeit der Flüssigkeit.

Die DE 38 04 471 A1 offenbart ein Verfahren zur Waschwasseraufbereitung in einem photographischen Kopierer zum Entwickeln. Bleichen-Fixieren und Wässern von photographischen Materialien, bei dem mittels Ionentausch die Leitfähigkeit des Wassers auf kleiner 5 µS/cm gebracht wird.

Die US 6,432,306 B1 offenbart eine Vorrichtung zur Deionisierung einer pH instabilen Substanz durch Abtrennung von Salzen aus einer Flüssigkeit. Hier wird zunächst das Anion gegen HCO3 getauscht. Dieses dann in einem Kationenauschtauscher ausgetrieben. Durch die Pufferkapazität von HCO3 gibt es dann in dem Kationenauschtauscher keine nennenswerte pH Erniedrigung.

Die US 4 145 281 A offenbart schwach basische Anionentauscher, die in Chlorid- oder Sulfatform gebracht, zur Entfernung von Dichromationen verwendet und anschließend regeneriert werden. Dementsprechend betrifft die Erfindung ein Verfahren zur Anhebung der Leitfähigkeit von vollentsalztem Wasser. Sie zeichnet sich dadurch aus, dass dazu ein schwach basischer Anionenaustauscher verwendet wird.

Dies hat den Vorteil, dass die erfindungsgemäße Methode, bzw. das Verfahren, ohne mechanische und/oder hydraulische Dosiermittel für Zusatzstoffedurchgeführt werden kann. Und auch ohne Zudosierung von CO₂ oder Zudosierung eines Wasser mit höherer Leitfähigkeit. Durch den Wegfall solcher Mittel kann dieses Verfahren daher vergleichsweise kostengünstiger und weniger störanfällig, also robuster durchgeführt werden.

Der schwach basische Anionenaustauscher bildet ein Filterbett aus, über das das vollentsalzte Wasser geleitet wird. Dadurch kann das aufzubereitende Wasser direkt im Anschluss an die Vollentsalzung im gewünschten Maße in seiner Leitfähigkeit beeinflusst werden. Besonders bevorzugt sogar in einem gemeinsamen Gehäuse. Damit kann auch eine einfach handzuhabende Vorrichtung zur Durchführung des erfindungsgemäßen Verfahrens zur Verfügung gestellt werden.

Vorgeschlagen wird hierzu folgende verfahrenstechnische Anordnung um Wasser mit einer Leitfähigkeit von ca. 5 µS/cm bis ca. 20 µS/cm herzustellen:
Als erster Schitt wird Wasser mit einer Leitfähigkeit kleiner ca. 5µS/cm erzeugt. Dieses Wasser kann durch Ionenaustausch mittels Mischbett (Stark saure Kationenaustauscher und stark basische Anionenaustauscher) oder durch Ionenaustausch durch die schichtweise Anordnung von wenigstens einer Schicht stark saurem Kationenaustauscher in H-Form und einem nachgeschalteten schwach und/oder stark basischen Anionenaustauscher geschehen. Prinzipiell kann das Wasser auch einer Umkehrosmoseanlage mit entsprechender Restleitfähigkeit entstammen.

Der nun erfindungsgemässe zweite Schritt der Einstellung der Restleitfähigkeit erfolgt durch eine Ansäuerung über schwach basischen Anionenaustauscher. Der Begriff Leitwertstabilisierungsstufe ist im Folgenden gleichzusetzen mit der Ansäuerung durch die Filtration über ein Filterbett mit schwach basischen Anionenaustauscher. Das Mass der Ansäuerung hängt von der Basizität des Anionenaustauschers und dem gewählten Gegenion sowie dem spezifischen Beladungsgrad ab.

Beim Ionenaustausch ist das Gegenion das Ion, welches die Aktivengruppen des Ionenaustauschers elektrisch neutralisiert.

Bei Anionenaustauschern ist das Gegenion negativ geladen und somit ein Anion. D. h., bei Anionenaustauschern sind die aktiven Gruppen positiv geladen . Als Gegenionen kommen bei Anionenaustauschern z.B. in Betracht: Chlorid, Sulfat, Nitrat, Fluorid, Nitrit, Bromid, Hydrogencarbonat, Carbonat, Hydroxyionen etc. Dementsprechend können beim Anionenaustauscher die Gegenionen beliebige Anionen sein.

Bei Kationenaustauschern ist das Gegenion positiv geladen und somit ein Kation. D. h., bei Kationenaustauschern sind die aktiven Gruppen negativ geladen.

Gemäß einer bevorzugten Ausführungsform kann das in Schritt zwei definierte Wasser über ein Filterbett mit einem zu ca. 20% bis ca. 90% in der Nitratform befindlichen schwach basischen Anionenaustauscher geleitet werden. Ein Beispiel für solch einen Austauscher ist ein S4528 von Lanxess^{®}.

Weiter bevorzugt kann neben Nitrat auch ein anderes Gegenion für den schwach basischen Anionenaustauscher Verwendung finden. Z.B Chlorid, Sulfat oder Nitrationen. Dabei zeigt sich, dass mit Chlorid als Gegenion Restleitfähigkeiten grösser 25 µS/cm erreicht werden. Mit Sulfat als Gegenion werden hingegen Restleitfähigkeiten kleiner 10 µS/cm erreicht.

Zur Durchführung des Verfahrens entzieht während des Leitwerterhöhungsvorgangs der Anionenaustauscher dem Wasser Hydroxidionen und überführt es so in die freie Baseform.

In einer weiter bevorzugten Weise kann zur Erzielung eines Sollleitwerts zwischen 10 µS/cm und 25 µS/cm Nitrat als Gegenion verwendet werden und der Nitratgehalt des schwach basischen Austauschers im Bereich von ca. 25% bis ca. 75% der Totalkapazität liegen.

Totalkapazität beim Anionenaustauscher ist die maximale Anzahl von positiven Ladungen am Anionenaustauscher bezogen auf einen Liter Ionenaustauschermenge. Und beim Kationenaustauscher ist Totalkapazität die maximale Anzahl von negativen Ladungen am Kationenaustauscher bezogen auf einen Liter Ionenaustauschermenge.

Die Verwendung eines schwach basischen Anionenaustauschers zur gezielten und dosierten Ansäuerung von Wasser mit einer Leitfähigkeit kleiner ca. 5µS ist überraschend, da man zum Ansäuern von Wasser üblicherweise H⁺

Ionen also Kationen benötigt. Ein stark saurer Kationenaustauscher in H-Form steht jedoch im Gleichgewicht mit dem vollentsalzten Wasser und kann keine weiteren H⁺ Ionen zur Ansäuerung abgeben, da das vollentsalzte Wasser nichts enthält, was der Austauscher im Gegenzug aufnehmen kann. Der schwach basische Anionenaustauscher, welcher zu einem erheblichen Teil seiner aktiven Gruppen mit Anionen (Chlorid, Nitrat, Sulfat, Hydrogencarbonat) beladen ist, kann jedoch, aufgrund seiner hohen Affinität für OH⁻und dem Bestreben die freie Baseform zu erreichen, dem Wasser OH⁻entziehen und dafür das Anion abgeben, bis sich ein pH Wert im Wasser von pH 3.5 bis pH 5, je nach verwendetem Anion, einstellt.

Wird einem vollentsalzten Wasser OH⁻entzogen, so wird gemäss den Regeln des Ionenprodukts für Wasser H⁺ gebildet und damit das Wasser angesäuert.

Auf diese Weise kann durch eine extrem niedrige Abgabe von Nitrat aus dem schwach basischen Anionenaustauscher das vollentsalzte Wasser durch die Bildung von H⁺ die Leitfähigkeit angehoben werden. Beim Verlassen des Filterbetts steht dabei das so angesäuerte Wasser im Wesentlichen im Gleichgewicht mit dem bevorzugt nitratbeladenen schwach basischen Anionenaustauscher. Da dies eine Gleichgewichtsreaktion ist, wächst der Leitwert nicht über einen bestimmten Wert an und ist auch weitgehend unabhängig von der Durchströmungsgeschwindigkeit solange das Filterbett groß genug dimensioniert wird. Filtrationsgeschwindigkeiten von bis zu 200BV/h sind dabei möglich.

BV/h bedeutet dabei Bettvolumen pro Stunde - Beispiel: Installierte Ionenaustauschermenge in L . Kann man z.B. maximal 100 BV /h behandeln, so bedeutet dies bei 1 L installierter Ionenaustauschermenge kann man maximale 100 l - Wasser pro Stunde (bzw. zu behandelnde Flüssigkeit) mit dem gewünschten Ergebnis aufbereiten.

Hat man bei 100 BV/h nur z.B. 0.2 L Ionenaustauscher installiert, so kann man auch nur bis zu 20 L/h mit dem gewünschten Ergebnis behandeln.

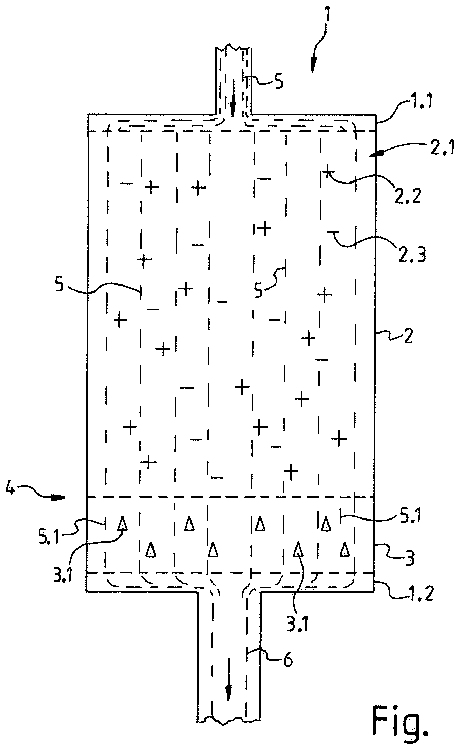

Ausführungsbeispiel:
Nachfolgend wird die Erfindung anhand eines
Ausführungsbeispiels näher erläutert.
Dementsprechend zeigt die beigefügte Figur eine Vorrichtung 1
zur Leitwerteinstellung für aufzubereitendes Wasser 5, umfassend einen Vollentsalzer 2 und eine Leitwertstabilisierungsstufe 3. Mittels eines Einlasses 1.1 wird aufzubereitendes Wasser 5 in die Vorrichtung 1 eingeleitet und mittels eines Auslasses 1.2 aufbereitetes Wasser 6 ausgeleitet.

Nach der Passage des Einlasses 1.1 durchfließt das aufzubereitende Wasser 5 ein Filterbett 2.1, das z. B. ein Gemisch aus stark saurem Kationentauscher 2.2 und stark und/oder schwach basischem Anionentauscher 2.3 umfassen kann, um das aufzubereitende Wasser 5 voll zu entsalzen und auf einen Leitwert kleiner etwa 5µS zu bringen.

Dieses voll entsalzte Wasser wird danach, z. B. nach Passieren eines Übergangsbereichs 4, zur Einflussnahme auf seinen Leitwert über eine Leitwertstabilisierungsstufe 3 geleitet. Diese Leitwertstabilisierungsstufe 3 umfasst zur gezielten Einstellung des Leitwertes einen schwach basischen Anionentauscher 3.1.

Dies, um dem vollentsalzten Wasser OH⁻zu entziehen, so gemäss den Regeln des Ionenprodukts für Wasser H⁺ gebildet und damit das Wasser angesäuert wird.

### Bezugszeichenliste:

1 Vorrichtung zur Leitwerteinstellung
1.1 Einlass
1.2 1.2 Auslass
2 Vollentsalzer
2.1 Filterbett
2.2 stark saurer Katinentauscher
2.3 stark basischer Anionentauscher
3 Leitwertstabilisierungsstufe
3.1 schwach basischer Anionentauscher
4 Übergangsbereich
5 aufzubereitendes Wasser
5.1 anzusäuerndes Wasser
6 aufbereitetes Wasser

## Patentansprüche

1. Verfahren zur Anhebung der Leitfähigkeit von vollentsalztem Wasser (5.1) mit einer Leitfähigkeit kleiner 5 µS/cm, **dadurch gekennzeichnet, dass** das vollentsalzte Wasser (5.1) über ein aus einem schwach basischen Anionenaustauscher (3.1) gebildetes Filterbett (3) geleitet wird, so dass dem vollentsalzten Wasser OH- entzogen und gemäss den Regeln des Ionenprodukts für Wasser H+ gebildet und damit das Wasser so angesäuert wird, dass dieses eine Leitfähigkeit von ca. 5 µS/cm bis etwa 25 µS/cm aufweist, wobei der schwach basische Anionenaustauscher zu 20% bis 90% seiner Totalkapazität mit einem Gegenion konditioniert ist, wobei als Gegenion Chlorid, Sulfat oder Nitrationen verwendet werden.

2. Verfahren nach Anspruch 1, **dadurch gekennzeichnet, dass** das das anzusäuernde Wasser (6) durch das aus dem schwach basischen Anionenaustauscher (3.1) ausgebildete Filterbett (3) so angesäuert wird, dass es nach dem Verlassen des Filterbetts mit dem schwach basischen Anionenaustauscher (3.1) im Gleichgewicht steht.

3. Verfahren nach Anspruch 1 oder 2, **dadurch gekennzeichnet, dass** zur Erzielung eines Sollleitwerts zwischen ca. 10 µS/cm und ca. 25µS/cm Nitrat als Gegenion verwendet wird und der Nitratgehalt des schwach basischen Austauschers im Bereich von ca. 25% bis ca. 75% der Totalkapazität liegt.

## Claims

1. A method for increasing the conductance of demineralised water (5.1) with a conductance of less than 5 µS/cm, **characterised in that** the demineralised water (5.1) is passed over a filter bed (3) formed from a weakly basic anion exchanger (3.1) such that OH- is removed from the demineralised water and H+ is formed in accordance with the rules of the ion product for water and thus the water is acidified such that it has a conductance of approx. 5 µS/cm to approx. 25 µS/cm, wherein 20% to 90% of the total capacity of the weakly basic anion exchanger is conditioned with a counterion, wherein chloride, sulphate or nitrate ions are used as counterions.

2. The method according to claim 1, **characterised in that** the water (6) to be acidified is acidified by the filter bed (3) formed from the weakly basic anion exchanger (3.1) in such a way that it is in equilibrium with the weakly basic anion exchanger (3.1) after leaving the filter bed.

3. The method according to claim 1 or 2, **characterised in that** to achieve a target value between approx. 10 µS/cm and approx. 25 µS/cm, nitrate is used as a counterion and the nitrate content of the weakly basic anion exchanger is in the range of approx. 25% to approx. 75% of the total capacity.

## Revendications

1. Procédé d'augmentation de la conductivité d'une eau totalement déminéralisée (5.1) présentant une conductivité inférieure à 5 µS/cm, **caractérisé en ce que** l'eau totalement déminéralisée (5.1) est dirigée sur un lit filtrant (3) constitué d'un échangeur d'anions (3.1) faiblement basique de telle sorte que OH- est retiré de l'eau totalement déminéralisée et que H+ est formé selon les règles du produit ionique pour l'eau et l'eau est ainsi acidifiée de telle sorte que celle-ci présente une conductivité d'environ 5 µS/cm à environ 25 µS/cm, l'échangeur d'anions faiblement basique étant conditionné à hauteur de 20 % à 90 % de sa capacité totale avec un contre-ion, les ions chlorure, sulfate ou nitrate étant utilisés comme contre-ion.

2. Procédé selon la revendication 1, **caractérisé en ce que** l'eau (6) à acidifier est acidifiée au moyen du lit filtrant (3) constitué de l'échangeur d'anions (3.1) faiblement basique de telle sorte que, après avoir quitté le lit filtrant, elle s'équilibre avec l'échangeur d'anions (3.1) faiblement basique.

3. Procédé selon la revendication 1 ou 2, **caractérisé en ce que** pour atteindre une conductance de consigne comprise entre environ 10 µS/cm et environ 25 µS/cm, du nitrate est utilisé comme contre-ion et la teneur en nitrate de l'échangeur faiblement basique se situe dans la plage allant d'environ 25 % à environ 75 % de la capacité totale.
